# EUROPÄISCHE PATENTSCHRIFT

(11) **EP 1 578 558 B1**
(45) Veröffentlichungstag und Bekanntmachung des Hinweises auf die Patenterteilung: **17.12.2008**
(21) Anmeldenummer: 03812070.5
(22) Anmeldetag: 11.10.2003
(51) Int. Cl.: B23K 26/38, B23K 26/40, B60R 21/20, B29C 59/16

(54) **VERFAHREN ZUR BEHANDLUNG VON GEWEBEN UND DEREN VERWENDUNG IN AUSSTATTUNGSTEILEN VON FAHRZEUGEN, INSBESONDERE KRAFTFAHRZEUGEN**
METHOD FOR TREATING FABRICS AND THEIR USE IN VEHICLE EQUIPMENT, IN PARTICULAR MOTOR VEHICLE EQUIPMENT
PROCEDE DE TRAITEMENT DE TISSUS ET UTILISATION DE CES TISSUS DANS DES EQUIPEMENTS DE VEHICULES, NOTAMMENT DE VEHICULES MOTORISES

(30) Priorität: 24.12.2002 DE 10260988
(43) Veröffentlichungstag der Anmeldung: 28.09.2005
(73) Patentinhaber: Johnson Controls Interiors GmbH & Co. KG, 47929 Grefrath (DE)
(72) Erfinder: RENNER, Dieter, 47929 Grefrath (DE); MÜLLER, Georg, 40724 Hilden (DE)
(74) Vertreter: Hemmelmann, Klaus
(86) Internationale Anmeldenummer: PCT/EP2003/011277
(87) Internationale Veröffentlichungsnummer: WO 2004/058444

(56) Entgegenhaltungen:
- EP-A- 0 711 627
- EP-A- 1 213 193
- DE-A- 19 850 742

## Beschreibung

Die Erfindung betrifft ein Verfahren zur Erzeugung einer Schwächungszone in einem textilen Flächengebilde, insbesondere in einem Gewebe gemäß dem Oberbegriff des Anspruchs 1, sowie ein nach diesem Verfahren textiles Flächengebilde gemäß dem Oberbegriff des Anspruchs 11 (siehe, z.B., EP-A-1 213 193)

### Stand der Technik

Aus der Patentschrift EP 0 711 627 B1 sind gattungsgemäße Verfahren, Textilien und Verkleidungsteile für Kraftfahrzeuge bekannt. Nach dem dort offenbarten Verfahren wird eine Abdeckschicht vor dem Aufbringen auf einen Trägerkörper rückseitig im jenem Bereich, in dem der Trägerkörper mit einer Klappe für die Entfaltungsöffnung eines Airbags auszustatten ist, durch Behandlung mit einem Laser und den damit verbundenen Werkstoffabtrag mit einer rillenförmigen Schwächungszone versehen. Nachfolgend werden die Abdeckschicht und der Trägerkörper in ein Werkzeug eingelegt und der Zwischenraum zwischen diesen Komponenten mit einer Weichschaumlage ausgefüllt.

Die Abdeckschicht kann nach einer besonderen Ausführung auch aus einem Textilmaterial bestehen, welches rückseitig mit einer Glasfaserversteifungsschicht verbunden ist. Die durch das Laserschneiden erzeugte Rille dringt dabei völlig durch die Glasfaserversteifungsschicht sowie teilweise durch die Textilschicht.

Um zu verhindern, dass der Laserstrahl vollständig durch die Abdeckschicht durchtritt und das Verkleidungsteil entlang der Klappenränder zerschneidet oder dass die Schwächungszone von Fahrzeuginnenraum her sichtbar wird, wird die Wandstärke im Bereich der Schwächungszone durch Regeln des Lasers in Abhängigkeit von der Dicke der Abdeckschicht auf einem konstanten Wert gehalten. Die bevorzugte Schneidtiefe beträgt dabei etwa 20 bis 80% der Dicke der Abdeckschicht. Diese in Abhängigkeit von einem Feedback-Signals eines Sensors, z. B. eines Ultraschallsensors, erfolgende Regelung ist jedoch aufwendig und führt bei der Anwendung auf textile Abdeckschichten zu unbefriedigenden Ergebnissen, da deren Wanddicke zwischen den Fäden auf einen Wert von "Null" abfällt und ein konstanter Restquerschnitt folglich nicht erzielt werden kann.

In der Druckschrift DE 198 50 742 A1 wird ein Gewebe beschrieben, dessen Sollbruchstelle für den Airbagaustritt durch Einfügen einer Naht mit definierter Reißkraft erzeugt wird. Die Reißfestigkeit der Naht ist so bemessen, dass sie normalem Gebrauch standhält, beim Entfalten des Airbags jedoch aufreißt.

Derartige Sollbruchstellen sind grundsätzlich sichtbar. In Fahrzeugsitzen, die üblicherweise aus zahlreichen Textilsegmenten durch Vernähen zusammengefügt werden und bei denen das Nahtbild auch dekorativen Charakter hat, stellt dies keinen Nachteil dar. Für flächige, textilkaschierte Verkleidungsteile hingegen ist dieses Vorgehen aus optischen Gründen und wegen der Aufdickung im Nahtbereich nicht möglich.

### Aufgabe

Der Erfindung liegt die Aufgabe zugrunde, ein zuverlässiges und einfaches Verfahren zur Herstellung von im Wesentlichen unsichtbaren Sollbruchstellen in textilen Flächengebilden bereitzustellen.

### Lösung

Die Erfindung entspricht ein Verfahren gemäß Anspruch 1 und ein textiles Flächengebilde gemäß Anspruch 11.

Vorzugsweise weicht entlang der Schwächungszone der Abstand d der Bohrungen jeweils vom Abstand D der Fäden ab. Durch dieses Vorgehen wird sichergestellt, dass nicht eine Vielzahl aufeinanderfolgender Laserbehandlungen in den Fadenzwischenräumen, beispielsweise zwischen den Kett- und Schußfäden eines Gewebes, ohne Wirkung bleibt und örtlich eine unzureichende Schwächung des textilen Flächengebildes bewirkt.

Der Abstand d der Bohrungen wird geringer als der Fadenabstand gewählt und beträgt gemäß der Erfindung das 0,6 bis 0,75fache des Abstand D der Fäden. Da bei einem kurvenartigen Verlauf der Sollbruchstelle der örtliche Abstand D der Fäden entlang der Schwächungszone auch bei einer regelmäßigen Gewebestruktur variiert, ist es gegebenenfalls erforderlich, den Abstand d zwischen den Bohrungen über die Länge der Schwächungszone zu verändern. Dies kann bei regelmäßigen Geweben durch eine entsprechende Steuerung des Laserroboters erfolgen, bei unregelmäßigen Textilien jedoch durch eine fortlaufende Bestimmung des örtlichen Fadenabstands D, beispielsweise durch eine Analyse der Textilstruktur im Durchlichtverfahren.

Da insbesondere die zur Anwendung in Kraftfahrzeugen geeigneten textilen Flächengebilden eine relativ raue Oberfläche aufweisen, können die Bohrungen zumindest teilweise als den Faden vollständig durchdringende, vorzugsweise von der dem Fahrzeuginnenraum abgewandten Seite her eingebrachte Perforationen ausgebildet werden. Die im Verhältnis zu den üblicherweise verwendeten Fadendicken kleinen Austrittsöffnungen sind zumindest bei dunkel gefärbten Textilen nicht sichtbar. Auf eine aufwendige Regelung der Bohrungstiefe kann in diesem Fall verzichtet werden.

Eine besonders zuverlässige Einbringung der Schwächungszone läßt sich dadurch herbeiführen, dass die Bohrungen gegenüber der Oberfläche des textilen Flächengebildes geneigt eingebracht werden. Vorzugsweise beträgt die Neigung gegenüber der örtlichen Senkrechten auf die Oberfläche des textilen Flächengebildes 20° bis 45°, insbesondere etwa 30°. Die Neigungsverstellung kann dabei beispielsweise durch Schrägstellung des Lasers, eine entsprechende Umlenkung des Laserstrahls über einen Spiegel oder durch geeignetes Positionieren des textilen Flächengebildes durchgeführt werden.

Unter Anwendung des eingangs beschriebenen Verfahrens läßt sich ein mit einer Airbagklappe versehenes, textilkaschiertes Verkleidungsteils für ein Fahrzeug vorzugsweise dadurch herstellen, dass in ein textiles Flächengebilde mittels Laser eine Schwächungszone eingebracht und dieses nachfolgend auf einen Trägerkörper aufgebracht, insbesondere aufkaschiert wird. Falls zur Verbesserung der Haptik des Verkleidungsteils eine Zwischenlage aus einem Weichschaum vorzusehen ist, wird das textile Flächengebilde auf seiner nachfolgend dem Trägerkörper zugewandten Seite mit Vorteil mit einem Weichschaum versehen, in einem ersten Schritt mittels Laser eine linienförmige Schwächungszone in den Weichschaum und in einem zweiten Schritt die im Wesentlichen deckungsgleiche linienförmige Schwächungszone in das textile Flächengebilde eingebracht wird.

Die Klappe für den Airbagdurchtritt kann trägerkörperseitig dadurch erzeugt werden, dass der Trägerkörper vor oder nach dem Aufbringen des textilen Flächengebildes seinerseits mit einer Schwächungszone versehen wird, die im Wesentlichen deckungsgleich zur Schwächungszone im textilen Flächengebilde angeordnet wird. Vorzugsweise wird die Schwächungszone im Trägerkörper durch örtlichen Werkstoffabtrag mittels Laser erzeugt.

### Figuren

Die Figuren stellen beispielhaft und schematisch verschiedene Ausführungen der Erfindung dar.

Es zeigen:
- Fig. 1: ein erfindungsgemäß ausgeführtes, textilkaschiertes Verkleidungsteil mit einer Airbagaustrittsklappe
- Fig. 2: einen Schnitt A-A durch das Verkleidungsteil nach Fig. 1
- Fig. 3: einen vergrößerten Schnitt B-B durch die Schwächungszone der Airbagaustrittsklappe im Verkleidungsteil nach Fig. 1
- Fig. 4: eine Darstellung der Bohrungsanordnung im textilen Flächen- gebilde nach einer ersten Ausführung der Erfindung
- Fig. 5: die Bohrungsanordnung nach einer anderen Ausbildung der Erfindung

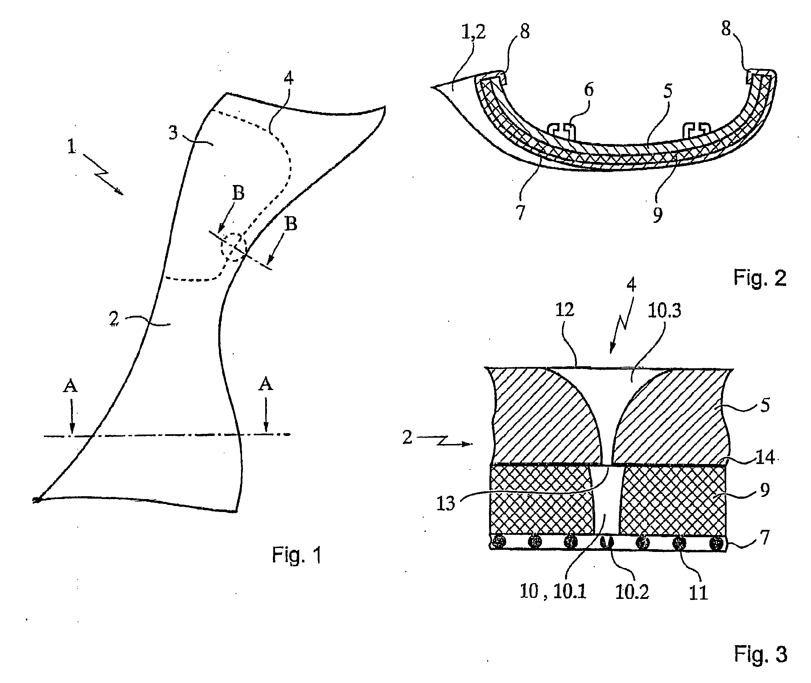

Das in Fig. 1 abgebildete Verkleidungsteil 1 ist als Säulenverkleidung 2 zur Abdeckung der C-Säule eines Personenkraftwagens ausgebildet, der zum Schutz der rückwärtigen Insassen mit einem nicht dargestellten Seitenairbag ausgestattet ist. Dieser ist zwischen dem oberen Bereich der Säulenverkleidung 2 und der Fahrzeugkarosserie angeordnet und entfaltet sich bei einem Unfall durch eine Airbagaustrittsklappe 3 hindurch zum Fahrzeuginnenraum. Die Airbagaustrittsklappe ist für die Insassen unsichtbar in die Säulenverkleidung 2 integriert und schwenkt nach Aufreißen einer in diese eingebrachten linienartigen, U-förmigen Schwächungszone 4 (Sollbruchstelle) zum Innenraum hin, wodurch sich im Verkleidungsteil 1 eine Austrittsöffnung für den sich entfaltenden Airbag bildet.

Wie aus Fig. 2 ersichtlich, besteht die Säulenverkleidung 2 aus einem gewölbten Trägerkörper 5 mit Befestigungselementen 6, mittels derer er an der C-Säule der Fahrzeugkarosserie verrastbar ist. Der Trägerkörper wird bevorzugt mittels Spritzgießen aus einem steifen, thermoplastisch verarbeitbaren Kunststoff, beispielsweise Polypropylen, gefertigt.

Innenraumseitig ist die Säulenverkleidung 2 mit einem textilen Flächengebilde 7 in Form eines Polyester- oder Polyester-Woll-Mischgewebes verkleidet, das seitlich unter Ausbildung eines Umbugs 8 um den Trägerkörper 5 herumgezogen ist. Zwischen Trägerkörper 5 und textilem Flächengebilde 7 ist zur Verbesserung der Haptik eine Weichschaumlage 9 von 3 bis 5 mm Dicke angeordnet, die vorzugsweise aus einem geschlossenzelligen Polyester- oder Polyurethanschaum besteht.

Im Bereich der Schwächungszone 4 ist die Säulenverkleidung 2 mit einer Vielzahl linienförmig angeordneter, zueinander beabstandeter Bohrungen 10 versehen, deren Ausbildung aus Fig. 3 hervorgeht. In einem ersten Arbeitsschritt werden das textile Flächengebilde 7 und die Weichschaumlage 9 beispielsweise durch Flammkaschieren miteinander verbunden. Nachfolgend werden durch Werkstoffabtrag mittels Laser in die Weichschaumlage 9 mit hoher Vorschubgeschwindigkeit Bohrungen 10.1 eingebracht. Bedingt durch die geringe Dichte der Weichschaumlage 9 ist die zum Werkstoffabtrag erforderliche Zeit sehr gering, ferner bilden sich zwangsläufig Bohrungen 10.1 mit einem relativ großen Durchmesser aus, die ineinander übergehen und somit eine rillenartige Schwächungszone 4 ausbilden können. Anschließend wird der Verbund aus Weichschaumlage 9 und textilem Flächengebilde 7 im Bereich der Schwächungszone 4 mit geringerer Vorschubgeschwindigkeit erneut einer Laserbehandlung unterzogen, welche die Ausbildung kleinerer Bohrungen 10.2 in den Fäden 11 (Kett- und/oder Schußfäden) zur Folge hat.

Hierzu gesondert wird die Schwächungszone 4 durch Aneinanderreihung von lasergenerierten Bohrungen 10.3 auch im Trägerkörper 5 ausgebildet, wobei die Eintrittszone 12 des Lasers einen breiteren Werkstoffabtrag aufweist als die dem Fahrzeuginnenraum zugewandte Austrittszone 13. Gleiches gilt für die Bohrungen 10.1 und 10.2, wobei die Durchmesserunterschiede in der Weichschaumlage 9 geringer ausfallen als im Trägerkörper 5 und in den Fäden 11.

Anschließend wird der Verbund aus Weichschaumlage 9 und textilem Flächengebilde 7 unter Hinzufügung eines Klebstoffs 14 auf die innenraumseitige Oberfläche des Trägerkörper 5 in der Weise aufkaschiert, dass sich die linienartig angeordneten Bohrungen 10.1 bis 10.3 im Bereich der Schwächungszone 4 im Wesentlichen decken.

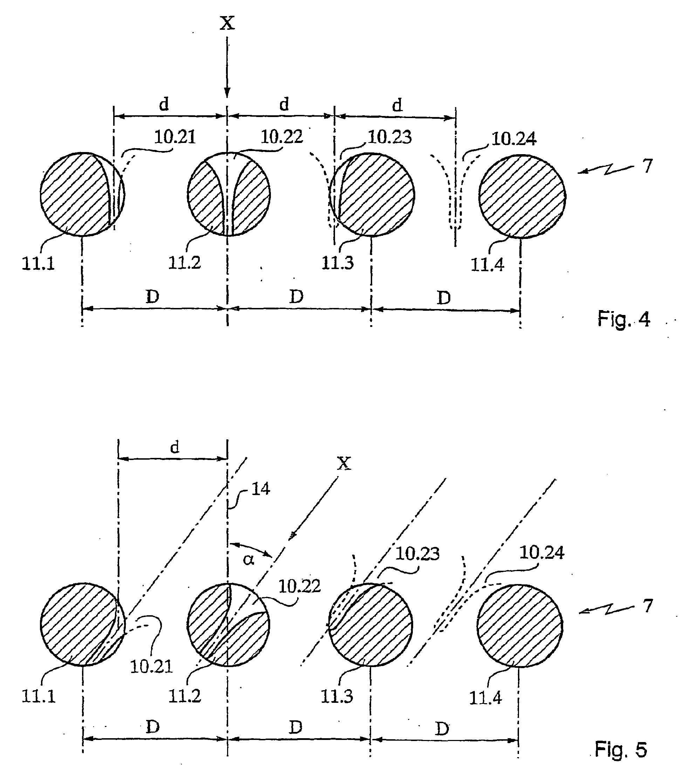

Fig. 4 zeigt in einem ersten Beispiel die Anordnung der Bohrungen 10.2 im textilen Flächengebilde 7. Die Fäden 11.1 bis 11.4, deren Abstand D von Fadenmitte zu Fadenmitte beispielsweise 350 µm betragen kann, werden von ihrer dem Fahrzeuginnenraum abgewandten Seite her mit einem Laser (Pfeil X) behandelt, der den bereits erwähnten kraterartigen Werkstoffabtrag verursacht. In dieser Darstellung trifft der Laser senkrecht zur Oberfläche des textilen Flächengebildes 7 mittig auf den Faden 11.2 auf und erzeugt eine zentrische, durchgehende Bohrung 10.22. Die Austrittsöffnung weist einen sehr geringen Durchmesser auf und ist mit bloßem Auge vom Fahrzeuginnenraum her nicht erkennbar.

Die Achsen der Bohrungen 10.21 bis 10.24 sind um einen Abstand d zueinander versetzt, der geringer ist als der Abstand D zwischen den Fäden 11 und im Ausführungsbeispiel etwa 250 µm beträgt. Infolge dieser Abstandsdifferenz werden die benachtbart zum Faden 11.2 befindlichen Fäden 11.1 und 11.3 zwar nur teilweise und der sich daran anschließende Faden 11.4 überhaupt nicht vom Laser erfaßt, so dass die (fiktive) Bohrung 10.24 ins Leere läuft, es kann jedoch sicher vermieden werden, dass alle Bohrungen 10.2 zwischen den Fäden 11 verlaufen und sich somit keine Schwächungszone ausbildet.

Bei gleicher Laserintensität und damit unverändertem Austrittsdurchmesser läßt sich der Werkstoffabtrag in der Schwächungszone 4 dadurch erhöhen, dass der Laserstrahl bei unverändertem Abstand d der Bohrungen 10.2 gegenüber der zur Oberfläche des textilen Flächengebildes 7 Senkrechten 14 um einen Winkel α geneigt auf diese auftrifft. Im Ausführungsbeispiel lassen sich mit Neigungen von 20° bis 45°, insbesondere etwa 30°, die besten Ergebnisse erzielen.

Üblicherweise wird das textile Flächengebilde 7 in ebener Ausrichtung mit dem Laser behandelt und nachfolgend auf einen komplex geformten Trägerkörper 5 aufgebracht. In Ausnahmefällen könnte jedoch auch die Laserbehandlung eines bereits dreidimensional verformten textilen Flächengebildes 7 erforderlich werden, so dass die Ausrichtung des Lasers (Pfeil X) zur örtlichen Oberfläche des textilen Flächengebildes 7 beim Abfahren der linienartigen Schwächungszone 4 nachzustellen ist.

Selbstverständlich sind derartig behandelte Textilien nicht nur zur Kaschierung flächer Verkleidungteile geeignet, sondern können auch bei anderen Ausstattungsteilen, beispielsweise Fahrzeugsitzen mit integriertem Airbag, Anwendung finden. Ebenso ist die Verwendung in der Kleidungsindustrie, beispielsweise bei der Herstellung von Sicherheitskleidung (Berufskleidung, Schutzkleidung mit integriertem Airbag für Motorradfahrer) denkbar.

### Bezugszeichen

- 1: Verkleidungsteil
- 2: Säulenverkleidung
- 3: Airbagaustrittsklappe
- 4: Schwächungszone
- 5: Trägerkörper
- 6: Befestigungselement
- 7: textiles Flächengebilde
- 8: Umbug
- 9: Weichschaumlage
- 10: Bohrung
- 11: Faden
- 12: Eintrittszone
- 13: Austrittszone
- 14: Senkrechte

- X: Pfeil (Laserstrahl)

## Patentansprüche

1. Verfahren zur Erzeugung einer Schwächungszone (4) in einem textilen Flächengebilde (7), insbesondere in einem Gewebe, durch partiellen Abtrag des Textilwerkstoffs durch Behandlung mit Laserstrahlung, wobei in die Fäden (11) des textilen Flächengebildes (7) in linienförmiger Anordnung zueinander beabstandete Bohrungen (10.2) eingebracht werden, **dadurch gekennzeichnet, dass** die Behandlung mit Laserstrahlen derartig angeordnet wird, dass entlang der Schwächungszone (4) der Abstand (d) der Bohrungen (10.2) das 0,6 bis 0,75fache des Abstands (D) der Fäden (11) beträgt,

2. Verfahren nach Anspruch 1, **dadurch gekennzeichnet, dass** die Bohrungen (10.2) zumindest teilweise als Perforationen ausgebildet sind.

3. Verfahren nach einem der vorhergehenden Ansprüche, **dadurch gekennzeichnet, dass** die Bohrungen (10.2) gegenüber der örtlichen Senkrechten (14) zur Oberfläche des textilen Flächengebildes (7) geneigt eingebracht werden.

4. Verfahren nach Anspruch 3, **dadurch gekennzeichnet, dass** die Neigung 20° bis 45°, insbesondere etwa 30° beträgt.

5. Verfahren zur Erzeugung einer Schwächungszone (4) in einem textilen Flächengebilde (7), insbesondere in einem Gewebe, durch partiellen Abtrag des Textilwerkstoffs durch Behandlung mit Laserstrahlung, nach Anspruch 1, **dadurch gekennzeichnet, dass** das textile Flächengebilde (7) dreidimensional verformt und in die Fäden (11) des textilen Flächengebildes (7) in linienförmiger Anordnung zueinander beabstandete Bohrungen (10.2) eingebracht werden, wobei die Ausrichtung der Laserstrahlung (Pfeil X) zur örtlichen Oberfläche des textilen Flächengebildes (7) beim Abfahren der Schwächungszone nachgestellt wird und dass die Behandlung mit Laserstrahlen derartig angeordnet wird, dass entlang der Schwächungszone (4) der Abstand (d) der Bohrungen (10.2) das 0,6 bis 0,75fache des Abstands (D) der Fäden (11) beträgt.

6. Verfahren zur Herstellung eines textilkaschierten Verkleidungsteils (1) für ein Fahrzeug, insbesondere für ein Kraftfahrzeug, wobei zur Erzeugung einer Schwächungszone (4) in einem textilen Flächengebilde (7), insbesondere in einem Gewebe, ein partieller Abtrag des Textilwerkstoffs durch Behandlung mit Laserstrahlung erfolgt und in die Fäden (11) des textilen Flächengebildes (7) in linienförmiger Anordnung zueinander beabstandete Bohrungen (10.2) eingebracht werden, unter Anwendung des Verfahrens nach Anspruch 1 bis 5, **dadurch gekennzeichnet, dass** das textile Flächengebilde (7) nach dem Einbringen der Schwächungszone (4) unter Ausbildung einer zum Innenraum hin schwenkbaren Airbagaustrittsklappe (3) auf einen Trägerkörper (5) aufgebracht, insbesondere aufkaschiert wird.

7. Verfahren zur Herstellung eines textilkaschierten Verkleidungsteils (1) für ein Fahrzeug, insbesondere für ein Kraftfahrzeug, wobei zur Erzeugung einer Schwächungszone (4) in einem textilen Flächengebilde (7), insbesondere in einem Gewebe, ein partieller Abtrag des Textilwerkstoffs durch Behandlung mit Laserstrahlung erfolgt und in die Fäden (11) des textilen Flächengebildes (7) in linienförmiger Anordnung zueinander beabstandete Bohrungen (10.2) eingebracht werden, unter Anwendung des Verfahrens nach Anspruch 1 bis 5, **dadurch gekennzeichnet, dass** das textile Flächengebilde (7) nach dem Einbringen der Schwächungszone (4) auf einen Trägerkörper (5) aufgebracht, insbesondere aufkaschiert wird und dass der Trägerkörper (5) vor dem Aufbringen des textilen Flächengebildes (7) seinerseits mit einer Schwächungszone (4) versehen wird.

8. Verfahren nach Anspruch 7, **dadurch gekennzeichnet, dass** die Schwächungszone (4) im Trägerkörper (5) im Wesentlichen deckungsgleich zur Schwächungszone (4) im textilen Flächengebilde (7) angeordnet wird.

9. Verfahren nach Anspruch 7 oder 8, **dadurch gekennzeichnet, dass** die Schwächungszone (4) im Trägerkörper (5) durch örtlichen Werkstoffabtrag mittels Laserstrahlung erzeugt wird.

10. Verfahren nach einem der vorhergehenden Ansprüche, **dadurch gekennzeichnet, dass** das textile Flächengebilde (7) auf seiner nachfolgend dem Trägerkörper (5) zugewandten Seite mit einer Weichschaumlage (9) versehen wird, in einem ersten Schritt mittels Laserstrahlung eine linienförmige Schwächungszone (4) in die Weichschaumlage (9) und in einem zweiten Schritt die im Wesentlichen deckungsgleiche Schwächungszone (4) in das textile Flächengebilde (7) eingebracht wird.

11. Textiles Flächengebilde (7) mit Fäden mit einem Abstand zwischen den Fäden. wobei die Fäden durch Behandlung mit Laserstrahlung erzeugte Bohrungen aufweist, **dadurch gekennzeichnet, dass** deren Abstand das 0,6 bis 0,75fache des Abstands der Fäden beträgt.

12. Verwendung des textilen Flächengebildes (7) nach Anspruch 11 zur Herstellung von Ausstattungsteilen für den Fahrzeuginnenraum, insbesondere von textilkaschierten Verkleidungsteilen (1) oder Sitzen für Fahrzeuge.

13. Verwendung des textilen Flächengebildes (7) nach Anspruch 11, zur Herstellung von Kleidungsstücken, insbesondere von Sicherheits-Berufskleidung und Schutzkleidung mit integriertem Airbag für Motorradfahrer.

14. Mit einer Airbagaustrittsklappe (3) versehenes, textilkaschiertes Verkleidungsteil (1) für ein Fahrzeug, mit einem textiles Flächengebilde gemäß Anspruch 11 bei welchem zur Erzeugung einer Schwächungszone (4) durch partiellen Abtrag des Textilwerkstoffs mittels Behandlung mit Laserstrahlung in die Fäden (11) des textilen Flächengebildes (7) in linienförmiger Anordnung zueinander beabstandete Bohrungen (10.2) eingebracht werden, und wobei das Flächengebilde auf einen Trägerkörper aufgebracht, insbesondere aufkaschiert ist.

## Claims

1. Method for producing a weakening zone (4) in a textile surface structure (7), in particular in a fabric, by partial removal of the textile material by means of treatment with laser radiation, mutually spaced holes (10.2) being introduced into the threads (11) of the textile surface structure (7) in a linear arrangement, **characterized in that** the treatment with laser radiation is arranged such that along the weakening zone (4), the spacing (d) of the holes (10.2) is 0.6 to 0.75 times the spacing (D) of the threads (11).

2. Method according to Claim 1, **characterized in that** the holes (10.2) are at least partly formed as perforations.

3. Method according to one of the preceding claims **characterized in that** the holes (10.2) are introduced at an angle with respect to the local perpendicular (14) to the surface of the textile surface structure (7).

4. Method according to Claim 3, **characterized in that** the inclination is 20° to 45°, in particular about 30°.

5. Method for producing a weakening zone (4) in a textile surface structure (7), in particular in a fabric, by partial removal of the textile material by means of treatment with laser radiation, according to Claim 1, **characterized in that** the textile surface structure (7) is deformed three-dimensionally and holes (10.2) which are spaced apart from one another in a linear arrangement being introduced into the threads (11) of the textile surface structure (7), the orientation of the laser radiation (arrow X) with respect to the local surface of the textile surface structure (7) being adjusted during departure from the weakening zone, and **in that** the treatment with laser beams is arranged in such a way that along the weakening zone (4), the spacing (d) of the holes (10.2) is 0.6 to 0.75 times the spacing (D) of the threads (11).

6. Method for producing a textile-laminated trim part (1) for a vehicle, in particular for a motor vehicle, a partial removal of the textile material being carried out by treatment with laser radiation in order to produce a weakening zone (4) in a textile surface structure (7), in particular in a fabric, and holes (10.2) which are spaced apart from one another in a linear arrangement being introduced into the threads (11) of the textile surface structure (7), with use of the method according to Claims 1 to 5, **characterized in that,** after the weakening zone (4) has been introduced, the textile surface structure (7) is applied to, in particular is laminated onto, a supporting element (5) with the formation of an airbag exit flap (3) which can be pivoted towards the interior.

7. Method for producing a textile-laminated trim part (1) for a vehicle, in particular for a motor vehicle, a partial removal of the textile material being carried out by treatment with laser radiation in order to produce a weakening zone (4) in a textile surface structure (7), in particular in a fabric, and holes (10.2) which are spaced apart from one another in a linear arrangement being introduced into the threads (11) of the textile surface structure (7), with use of the method according to Claims 1 to 5, **characterized in that,** after the weakening zone (4) has been introduced, the textile surface structure (7) is applied to, in particular is laminated onto, a supporting element (5), and **in that** the supporting element (5) is provided for its part with a weakening zone (4) before the textile surface structure (7) is applied.

8. Method according to Claim 7, **characterized in that** the weakening zone (4) in the supporting element (5) is arranged substantially congruently with the weakening zone (4) in the textile surface structure (7).

9. Method according to Claim 7 or 8, **characterized in that** the weakening zone (4) in the supporting element (5) is produced by local material removal by means of laser radiation.

10. Method according to one of the preceding claims, **characterized in that** the textile surface structure (7) is provided with a soft foam layer (9) on its side subsequently facing the supporting element (5), a linear weakening zone (4) is introduced into the soft foam layer (9) by means of laser radiation in a first step and, in a second step, the substantially congruent weakening zone (4) is introduced into the textile surface structure (7).

11. Textile surface structure (7) with threads with a spacing between the threads, the threads having holes made by means of treatment with laser radiation, **characterized in that** their spacing is 0.6 to 0.75 times the spacing of the threads.

12. Use of the textile surface structure (7) according to Claim 11 for producing equipment for the interior of a vehicle, in particular textile-laminated trim parts (1) or seats for vehicles.

13. Use of the textile surface structure (7) according to Claim 11 for producing items of clothing, in particular safety workwear and protective clothing with integrated airbag for motorcyclists.

14. Textile-laminated trim part (1), provided with an airbag exit flap (3), for a vehicle with a surface structure according to Claim 11, in which for the manufacture of a weakening zone (4) by partial removal of the textile material by means of treatment with laser radiation, mutually spaced holes (10.2) are introduced into the threads (11) of the textile surface structure (7) in a linear arrangement, and the surface structure being applied to a supporting element, in particular laminated on.

## Revendications

1. Procédé pour produire une zone d'affaiblissement (4) dans une structure textile en nappe (7), en particulier dans un tissu, par enlèvement partiel du matériau textile par traitement avec un faisceau laser, des alésages (10.2) espacés les uns des autres agencés en ligne étant pratiqués dans les fils (11) de la structure textile en nappe (7), **caractérisé en ce que** le traitement par faisceau laser est prévu de telle sorte que la distance (d) entre les alésages (10.2) le long de la zone d'affaiblissement (4) représente 0,6 à 0,75 fois la distance (D) entre les fils (11).

2. Procédé selon la revendication 1, **caractérisé en ce que** les alésages (10.2) sont réalisés au moins en partie sous forme de perforations.

3. Procédé selon l'une quelconque des revendications précédentes, **caractérisé en ce que** les alésages (10.2) sont pratiqués de manière inclinée par rapport à la verticale locale (14) à la surface de la structure textile en nappe (7).

4. Procédé selon la revendication 3, **caractérisé en ce que** l'inclinaison vaut 20° à 45°, en particulier environ 30°.

5. Procédé pour produire une zone d'affaiblissement (4) dans une structure textile en nappe (7), en particulier dans un tissu, par enlèvement partiel du matériau textile par traitement avec un faisceau laser selon la revendication 1, **caractérisé en ce que** la structure textile en nappe (7) est déformée tridimensionnellement et des alésages (10.2) espacés les uns des autres agencés en ligne sont pratiqués dans les fils (11) de la structure textile en nappe (7), l'orientation du faisceau laser (flèche X) par rapport à la surface locale de la structure textile en nappe (7) étant ajustée à la sortie de la zone d'affaiblissement et **en ce que** le traitement par faisceau laser est prévu de telle sorte que la distance (d) entre les alésages (10.2) le long de la zone d'affaiblissement (4) représente 0,6 à 0,75 fois la distance (D) entre les fils (11).

6. Procédé de fabrication d'une pièce d'habillage à revêtement textile (1) pour un véhicule, en particulier un véhicule automobile, dans lequel, pour la production d'une zone d'affaiblissement (4) dans une structure textile en nappe (7), en particulier dans un tissu, on effectue un enlèvement partiel du matériau textile par traitement par faisceau laser, et des alésages (10.2) espacés les uns des autres agencés en ligne sont pratiqués dans les fils (11) de la structure textile en nappe (7) en utilisant le procédé selon les revendications 1 à 5, **caractérisé en ce que** la structure textile en nappe (7) est appliquée sur un corps porteur (5), en particulier par laminage, après avoir pratiqué la zone d'affaiblissement (4) en formant un volet de sortie d'airbag (3) pouvant pivoter vers l'habitacle.

7. Procédé de fabrication d'une pièce d'habillage à revêtement textile (1) pour un véhicule, en particulier un véhicule automobile, dans lequel, pour la production d'une zone d'affaiblissement (4) dans une structure textile en nappe (7), en particulier dans un tissu, on effectue un enlèvement partiel du matériau textile par traitement par faisceau laser, et des alésages (10.2) espacés les uns des autres agencés en ligne sont pratiqués dans les fils (11) de la structure textile en nappe (7) en utilisant le procédé selon les revendications 1 à 5, **caractérisé en ce que** la structure textile en nappe (7) est appliquée sur un corps porteur (5), en particulier par laminage, après avoir pratiqué la zone d'affaiblissement (4), et **en ce que** le corps porteur (5) est pourvu pour sa part d'une zone d'affaiblissement (4) avant l'application de la structure textile en nappe (7).

8. Procédé selon la revendication 7, **caractérisé en ce que** la zone d'affaiblissement (4) dans le corps porteur (5) est disposée de manière approximativement en coïncidence avec la zone d'affaiblissement (4) dans la structure textile en nappe (7).

9. Procédé selon la revendication 7 ou 8, **caractérisé en ce que** la zone d'affaiblissement (4) dans le corps porteur (5) est produite par un enlèvement local de matériau au moyen d'un faisceau laser.

10. Procédé selon l'une quelconque des revendications précédentes, **caractérisé en ce que** la structure textile en nappe (7) est pourvue, sur son côté tournée à la suite du corps porteur (5), d'une couche de mousse souple (9), dans une première étape, une zone d'affaiblissement linéaire (4) est pratiquée par un faisceau laser dans la couche de mousse souple (9) et dans une deuxième étape, la zone d'affaiblissement (4) essentiellement en coïncidence est pratiquée dans la structure textile en nappe (7).

11. Structure textile en nappe (7) comprenant des fils avec un espacement entre les fils, les fils présentant des alésages produits par traitement par faisceau laser, **caractérisée en ce que** la distance entre les alésages correspond à 0,6 à 0,75 fois la distance entre les fils.

12. Utilisation de la structure textile en nappe (7) selon la revendication 11, pour fabriquer des équipements pour l'habitacle de véhicules, en particulier des pièces d'habillage (1) laminées avec un textile ou de sièges de véhicules.

13. Utilisation de la structure textile en nappe (7) selon la revendication 11, pour la fabrication des pièces d'habillage, en particulier pour des habillages professionnels de sécurité et des habillages de protection avec airbag intégré pour conducteurs de motocyclettes.

14. Pièce d'habillage (1) laminée avec un textile pour un véhicule, pourvue d'un volet de sortie d'airbag (3), avec une structure textile en nappe selon la revendication 11, dans laquelle, pour produire une zone d'affaiblissement (4) par enlèvement partiel du matériau textile par traitement avec un faisceau laser, des alésages (10.2) espacés les uns des autres agencés en ligne sont pratiqués dans les fils (11) de la structure textile en nappe (7), et la structure en nappe est appliquée sur un corps porteur, notamment par contrecollage.
